# FASCICULE DE BREVET EUROPEEN

(11) **EP 3 020 313 B1**
(45) Date de publication et mention de la délivrance du brevet: **24.10.2018**
(21) Numéro de dépôt: 15193858.6
(22) Date de dépôt: 10.11.2015
(51) Int. Cl.: A47J 36/02, A47J 27/00, A47J 45/06, H05B 6/06

(54) **RÉCIPIENT DE CUISSON MUNI D'UN DISPOSITIF MAGNÉTIQUE DE MESURE DE LA TEMPÉRATURE**
KOCHBEHÄLTER MIT MAGNETISCHEM MESSGERÄT FÜR DIE TEMPERATUR
COOKING RECEPTACLE HAVING A MAGNETIC TEMPERATURE MEASURING DEVICE

(30) Priorité: 14.11.2014 FR 1460981
(43) Date de publication de la demande: 18.05.2016
(73) Titulaire: SEB S.A., 69130 Ecully (FR)
(72) Inventeur: POLESEL, Jérôme, 74150 VALLIERES (FR); LINGLIN, Benoît, 74370 SAINT MARTIN BELLEVUE (FR)
(74) Mandataire: Bourrières, Patrice

(56) Documents cités:
- CN-A- 1 887 150
- FR-A1- 2 945 608
- JP-A- 2003 339 549

## Description

La présente invention concerne un récipient de cuisson comportant un capteur, plus particulièrement un capteur de température. Le récipient de cuisson est destiné à être disposé sur une plaque de cuisson, un brûleur ou analogue pour la cuisson d'aliments. Le récipient de cuisson est notamment une poêle, une casserole, une sauteuse, un faitout ou un autocuiseur.

On connaît du document EP0931495 un récipient de cuisson comportant un fond, un capteur de température intégré entre le fond et une plaque perforée sertie sur le fond. Le capteur de température est relié par deux fils conducteurs à un dispositif de contrôle agencé dans une poignée pour traiter la grandeur mesurée et déterminer la température. Le capteur de température et les deux fils conducteurs sont agencés dans un canal de réception réalisé dans le fond du récipient de cuisson.

Cependant, la mise en place des fils dans la calotte, le montage de la poignée sur la calotte et le raccordement des fils au dispositif de contrôle sont des opérations difficiles à réaliser dans un processus automatisé de production de récipients de cuisson.

De plus, les fils peuvent être dégradés lors du montage ou lors d'une utilisation anormale, notamment lors d'une surchauffe du récipient de cuisson et induire des erreurs de mesure de la température.

On connaît du document CN1887150 un récipient de cuisson destiné à être disposé sur une plaque de chauffe à induction pour la cuisson d'aliments et comportant une calotte réalisée en plusieurs matériaux amagnétiques. La calotte comporte un élément en matériau ferromagnétique présentant une température de Curie pouvant être comprise entre 50° et 300°C. La plaque de chauffe comporte un inducteur qui découple lorsque l'élément atteint sa température de Curie et devient amagnétique.

Un tel dispositif permet de couper le chauffage du récipient de cuisson à une température prédéterminée mais ne permet pas de mesurer la température de la calotte.

Le but de la présente invention est de remédier aux inconvénients précités et de proposer un récipient de cuisson muni d'un capteur de température qui soit de conception simple et économique à mettre en oeuvre.

Un autre but de l'invention est de proposer un récipient de cuisson muni d'un capteur de température qui présente un fonctionnement fiable et répétitif, durable dans le temps.

Ces buts sont atteints avec un récipient de cuisson destiné à être disposé sur une plaque de chauffe, un brûleur ou analogue pour la cuisson d'aliments et comportant une calotte réalisée en un ou plusieurs matériaux amagnétiques, caractérisé en ce que la calotte comporte un aimant présentant une aimantation rémanente non nulle qui varie en fonction de la température et présentant une température de Curie supérieure à 350°C, ladite variation d'aimantation rémanente générant une variation de champ magnétique et en ce que ledit aimant est destiné à coopérer avec au moins un capteur de mesure de champ magnétique agencé en périphérie de la calotte qui génère un signal électrique utilisée dans un dispositif de contrôle pour permettre de déterminer la température de la calotte.

La mise en chauffe de l'aimant provoque un abaissement de son aimantation rémanente qui peut être réversible si la température ne franchit pas sa température de Curie. Ainsi, dans un récipient de cuisson où la température maximum d'utilisation est d'environ 250°C avec d'éventuelles surchauffes à 300°C, l'aimant qui présente une température de Curie supérieure à 350°C conserve son aimantation rémanente. L'aimantation rémanente de l'aimant varie sur la plage de température d'utilisation du récipient de cuisson et permet au capteur de mesure du champ magnétique de mesurer une image de la température de la calotte.

Ainsi, la calotte comporte un capteur de température formé par l'aimant qui coopère avec le capteur de mesure de champ magnétique par une liaison magnétique, sans fils. Un capteur de flux placé en proximité permet d'interroger la variation d'aimantation rémanente en fonction de la température. Le process de fabrication de la calotte comporte uniquement une opération supplémentaire d'incorporation de l'aimant, une telle opération étant facile à réaliser.

En conséquence, on obtient un récipient de cuisson muni d'un capteur de température qui est particulièrement économique à mettre en oeuvre.

De manière avantageuse, la température de Curie de l'aimant est supérieure à 600°C.

Une température d'environ 600°C est supérieure à la température de cuisson d'un émail (565°C) dans le process de réalisation de la calotte du récipient de cuisson. Ainsi l'aimant peut être intégré à la calotte avant l'opération d'émaillage.

Avantageusement, l'aimant est choisi parmi les types AlNiCo ou SmCo ou ferrite.

Un aimant du type AlNiCo est un aimant fabriqué à partir d'un alliage comportant principalement de l'aluminium (Al), du nickel (Ni) et du cobalt (Co) avec certaines variantes pouvant inclure de façon minoritaire d'autres éléments tels que du fer (Fe), du cuivre (Cu) et parfois du titane (Ti). Ce type d'aimant est généralement fabriqué par fonderie et résiste ainsi bien aux contraintes mécaniques, ce qui permet de l'assembler dans la calotte par une opération de frappe. Un aimant de ce type peut fonctionner à température élevée jusqu'à une température de 550°C. Ainsi une fois rapporté dans la calotte, il peut supporter les étapes de traitement de surface de l'intérieur et/ou de l'extérieur de la calotte, notamment une dépose et cuisson vers 430°C d'un revêtement anti-adhésif ou une décoration par sérigraphie ou par pulvérisation d'une céramique de type sol-gel avec une température de cuisson de l'ordre de 250°C.

Un aimant du type SmCo est un aimant fabriqué par frittage à partir d'un alliage comportant du samarium (Sm) et du cobalt (Co). Un aimant de ce type peut fonctionner jusqu'à une température de 350°C. Un aimant du type SmCo présente également une haute résistance à la désaimantation.

Un aimant du type ferrite est bon marché. Un aimant de ce type peut fonctionner à une température suffisamment élevée et compatible avec les températures rencontrées dans l'utilisation de récipients de cuisson.

Avantageusement, la calotte présente un fond, l'aimant étant agencé sur ou dans le fond.

Ainsi, un aimant agencé sur ou dans le fond de la calotte du récipient de cuisson, au plus près des aliments contenus dans le récipient, pourra détecter la température représentative de l'état de ces aliments.

De préférence, la calotte présente une paroi latérale, l'aimant étant agencé sur ou dans la paroi latérale.

Ainsi, un aimant agencé sur ou dans la paroi latérale du récipient pourra être au plus près du capteur de mesure de champ magnétique agencé en périphérie de la calotte pour fiabiliser l'acquisition de la mesure de la variation de champ magnétique.

Avantageusement, la calotte comporte au moins un élément en matériau ferromagnétique présentant une température de Curie inférieure à 300°C, ledit élément étant agencé à proximité de l'aimant.

L'aimant qui présente une aimantation rémanente, polarise magnétiquement l'élément en matériau ferromagnétique à bas point de Curie qui est utilisé en tant que concentrateur des lignes de champ magnétique émanant de l'aimant. On peut utiliser d'une part cet élément en matériau ferromagnétique à bas point de Curie pour guider et concentrer le flux magnétique vers le capteur de mesure de champ magnétique afin d'augmenter le signal de détection, ou d'autre part utiliser cet élément en matériau ferromagnétique à bas point de Curie pour au contraire fermer les lignes de champ vers l'aimant empêchant leur propagation à distance. L'élévation de la température diminuera la perméabilité magnétique de l'élément en matériau ferromagnétique à bas point de Curie jusqu'à son point de Curie induisant une annulation de la propagation et de la concentration des lignes de champ dans cet élément. L'élément en matériau ferromagnétique à bas point de Curie peut être considéré comme une vanne de flux magnétique entre l'aimant et le capteur de mesure de champ magnétique Un tel agencement permet de détecter de manière fiable un seuil de température autour de la température de Curie.

De préférence, la calotte comporte deux éléments en matériau ferromagnétique présentant chacun une température de Curie différente, lesdits éléments étant agencés à proximité de l'aimant.

Un tel agencement permet de détecter de manière fiable deux seuils de température autour des températures de Curie des deux éléments en matériau ferromagnétique.

Avantageusement, les éléments en matériau ferromagnétique comportent respectivement deux parties, les parties étant empilées de manière alternée.

Cette disposition alternée permet de lisser la transition abrupte entre la phase ferromagnétique et la phase paramagnétique lorsque l'un des éléments atteint sa température de Curie afin d'obtenir une réponse en température douce, plus linéaire du capteur.

De manière avantageuse, les éléments en matériau ferromagnétique présentent respectivement une température de Curie égale à 120°C et une température de Curie égale à 210°C.

De manière avantageuse, l'aimant est agencé à coté ou au-dessus des parties emplilées des éléments en matériau ferromagnétique.

Avantageusement, l'aimant coopère avec deux capteurs de mesure du champ magnétique.

Un tel agencement permet d'améliorer l'interrogation à distance de l'aimantation rémanente de l'aimant par une mesure différentielle à deux capteurs de mesure du champ magnétique, afin de supprimer au mieux les perturbations externes. Ces perturbations proviennent notamment de l'environnement électromagnétique et magnétique du récipient de cuisson, tels que le champ géomagnétique terrestre constant et directionnel, le flux électromagnétique pulsé généré par une plaque de chauffe à foyer induction, la présence d'objets métalliques dans l'environnement proche du récipient de cuisson, ou la dérive en température du capteur de flux magnétique.

Un des capteurs de mesure de champ magnétique est défini comme référence sensible à toutes perturbations externes et internes au capteur, le deuxième capteur de mesure de champ magnétique est défini comme détecteur, sensible également à toutes perturbations externes et internes au capteur mais sensible au flux magnétique émanant de l'aimant logé dans la calotte.

Avantageusement, le récipient de cuisson comporte un élement en matériau ferromagnétique présentant une température de Curie supérieure à 600°C et comprenant une première extrémité agencée à proximité de l'aimant et une deuxième extrémité agencée sous un des capteurs ou entre les deux capteurs.

Cette disposition permet de mieux canaliser les lignes de champ magnétique émanant de l'aimant et de la vanne magnétique vers le capteur, et donc d'augmenter de façon substantielle le rapport signal sur bruit de mesure. Par exemple, lorsque la deuxième extrémité est agencée sous un des capteurs, le signal détecté par ce capteur peut être multiplié par un facteur de deux avec une meilleure robustesse aux perturbations électromagnétiques externes. Lorsque la deuxième extrémité est agencée entre les capteurs, on obtient une mesure différentielle nettoyée des bruits avec une amplification d'un facteur deux du signal utile.

Avantageusement, le récipient de cuisson comporte une poignée, le capteur de mesure de champ magnétique étant agencé dans la poignée.

Ainsi, le capteur de champ magnétique est déporté de l'aimant dans une zone plus froide que la zone où est implanté l'aimant.

De préférence, la poignée est amovible de la calotte.

Par poignée amovible de la calotte, on comprend que la poignée comporte des moyens de fixation qui sont détachables de la calotte sans la mise en oeuvre d'un outil.

La mise en oeuvre d'une liaison sans fil entre l'aimant et le capteur de flux magnétique permet de réaliser facilement une poignée amovible de la calotte. Un tel agencement permet de faciliter le rangement du récipient de cuisson et permet un passage en lave-vaisselle de la calotte et un nettoyage de la poignée qui comporte des éléments fragiles en dehors du lave-vaisselle.

Avantageusement, la poignée comporte un axe longitudinal et deux capteurs de mesure de champ magnétique coopérant avec l'aimant, les deux capteurs étant agencés le long dudit axe longitudinal ou de part et d'autre dudit axe longitudinal.

Lorsque les capteurs de mesure de champ magnétique sont agencés le long dudit axe longitudinal de la poignée, ils sont à des distances différentes de l'aimant. On obtient ainsi une dissymétrie de détection des deux capteurs de mesure du champ magnétique.

Cependant, une plaque de cuisson à foyer induction génère un champ électro magnétique dont la distribution présente une symétrie circulaire autour du centre du foyer induction. Lorsque les capteurs de mesure de champ magnétique sont agencés de part et d'autre de l'axe longitudinal de la poignée, ils sont positionnés sur un même cercle. Ainsi, ils reçoivent et mesurent un champ magnétique équivalent. L'aimant est dans ce cas excentré à gauche ou à droite de l'axe de la poignée afin de provoquer une dissymétrie de détection des deux capteurs de mesure du champ magnétique.

De préférence, le capteur de mesure de champ magnétique est agencé dans un boitier métallique permettant de réaliser un blindage électromagnétique.

L'agencement du capteur de mesure de champ magnétique dans un boitier métallique permet d'éliminer les composantes électromagnétiques fréquentielles tout en restant transparent à la contribution continue du flux magnétique provenant de l'aimant.

Avantageusement, le boitier métallique est réalisé dans une tôle d'aluminium ou de cuivre d'épaisseur inférieure à 2 millimètres.

Une telle disposition permet d'éliminer en quasi-totalité l'influence du champ électromagnétique d'une plaque de cuisson à foyer induction dont la fréquence de fonctionnement est autour de 27 kilo-Hertz.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue schématique en perspective d'un récipient de cuisson selon un mode particulier de réalisation de l'invention.
- La figure 2 illustre une vue schématique en coupe du récipient de cuisson, suivant la ligne II - II, illustré à la figure 1, le récipient de cuisson reposant sur une plaque de chauffe.

- La figure 3 illustre une vue schématique en perspective d'un récipient de cuisson selon un autre mode particulier de réalisation de l'invention.
- La figure 4 illustre une vue schématique en perspective d'un récipient de cuisson selon un autre mode particulier de réalisation de l'invention.
- Les figures 5 et 6 illustrent une vue schématique partielle en coupe du récipient de cuisson, suivant la ligne II - II, illustré à la figure 1 selon deux autres modes particuliers de réalisation de l'invention.

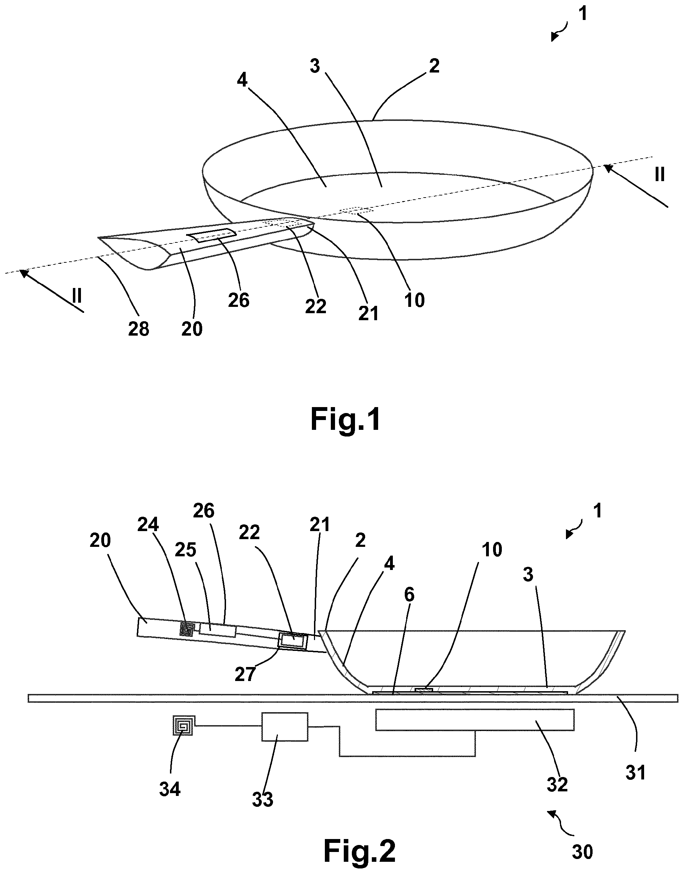

Tel que visible aux figures 1 et 2, un récipient de cuisson 1 comporte une calotte 2 qui comprend un fond 3 et une paroi latérale 4. La calotte 2 est réalisée en un matériau amagnétique, notamment en aluminium, par exemple par une opération de frappe d'un disque ou par une opération de fonderie. Le fond 3 présente une épaisseur dans laquelle est rapporté un aimant 10, de préférence par une opération de frappe. L'aimant 10 présente une aimantation rémanente qui varie en fonction de la température de la calotte 2 et qui génère une variation de champ magnétique. Le récipient de cuisson 1 comporte une poignée 20 dont une extrémité 21 est fixée sur la paroi latérale 4 par des moyens de fixation (non représentés sur les figures). La poignée 20 comporte un capteur 22 de mesure de champ magnétique qui est relié à un dispositif de contrôle 25. Le capteur 22 de mesure de champ magnétique est positionné au plus près de la calotte 2. Il mesure la variation de champ magnétique issu de l'aimant 10 et génère une variation d'un signal électrique utilisée dans le dispositif de contrôle 25 pour permettre de déterminer la température de la calotte 2. Le dispositif de contrôle 25 comporte notamment un afficheur 26 permettant d'indiquer à un utilisateur un paramètre représentatif de la température de la calotte 2.

Le capteur 22 de mesure de champ magnétique peut être choisi parmi un capteur à effet Hall à réponse linéaire, un capteur magnéto-inductif, un capteur à magnéto-résistance géante (GMR) ou un capteur à magnétorésistance anisotrope (AMR).

Tel que visible à la figure 2, le récipient de cuisson 1 repose sur une plaque de chauffe 30 notamment à résistances chauffantes électriques ou à induction qui comprend une plaque vitrocéramique 31, un dispositif de chauffe 32, notamment un pot chauffant ou un inducteur et un dispositif de commande 33. Le fond 3 de la calotte 2 comporte un élément 6 réalisé en un matériau ferromagnétique destiné, par exemple, à coopérer avec l'inducteur du dispositif de chauffe 32 pour faire chauffer le récipient de cuisson 1. L'élément 6 réalisé en un matériau ferromagnétique prend la forme d'une plaque qui est rapportée de manière à coiffer l'aimant 10 et à être en contact avec lui.

L'élément 6 est réalisé en un matériau ferromagnétique à bas point de Curie. C'est-à-dire que l'élément 6 en matériau ferromagnétique présente une température de Curie prédéterminée, par exemple 220°C, pour faire découpler la plaque de chauffe 30 à induction, une fois que la température de ce point de Curie est atteinte à l'endroit du matériau ferromagnétique. Par découpler, on comprend que la plaque de chauffe 30 ne génère plus de puissance de chauffe dans le récipient de cuisson 1. Un tel récipient de cuisson 1 utilisé avec une plaque de chauffe 30 à induction permet d'obtenir un fond 3 dont la température est régulée à une température sensiblement égale à la température de Curie. En effet, une fois que la température de Curie est atteinte, le matériau ferromagnétique perd ses propriétés magnétiques, la plaque de chauffe 30 par induction découple et ne génère plus de puissance dans le fond 3 du récipient de cuisson 1. La température dans le matériau ferromagnétique de l'élément 6 va alors baisser jusqu'à ce qu'il retrouve suffisamment ses propriétés magnétiques pour permettre à nouveau le couplage avec la plaque de chauffe 30. Ainsi, on peut préparer des aliments à une température de cuisson déterminée par la température de Curie, adaptée à la cuisson de l'aliment.

L'élément 6 qui coiffe l'aimant 10 forme une configuration de circuit magnétique permettant d'une part une exaltation de la sensibilité de détection du système, et d'autre part, l'utilisation d'aimants 10 permanents présentant de faible coefficient thermique tel que les aimants du type AlNiCo dont le coefficient thermique est de 0.02 % par degré Celsius ou du type SmCo dont le coefficient thermique est de 0.04 % par degré Celsius. En effet, dans une application de suivi de température de la calotte d'un récipient de cuisson, on privilégiera des aimants adaptés au fonctionnement à hautes températures du type AlNiCo dont la température de fonctionnement maximum est d'environ 550°C ou du type SmCo dont la température de fonctionnement maximum est d'environ 350°C.

Cet élément 6 est utilisé en tant que concentrateur des lignes de champ magnétique émanant de l'aimant 10. Ainsi, lorsque que la température est inférieure à la température de Curie, cet élément 6 guide et concentre le flux magnétique vers le capteur 22 de mesure de champ magnétique afin d'augmenter le signal de détection et lorsque la température s'élève pour s'approcher de la température de Curie, la perméabilité magnétique de l'élément 6 diminue jusqu'à son point de Curie induisant une annulation de la propagation et de la concentration des lignes de champ dans cet élément 6. L'élément 6 en matériau ferromagnétique à bas point de Curie peut être considéré comme une vanne de flux magnétique entre l'aimant 10 et le capteur 22 de mesure de champ magnétique : au-dessus de la température de Curie, le flux magnétique transitant entre l'aimant 10 et le capteur 22 est coupé.

Dans une variante de réalisation non illustrée, le fond 3 de la calotte 2 peut comporter un élément réalisé en un matériau ferromagnétique à bas point de Curie qui prend la forme d'une plaquette, par exemple rectangulaire. Une première extrémité de la plaquette est agencée au contact de l'aimant et une seconde extrémité de la plaquette est orientée vers le capteur de champ magnétique.

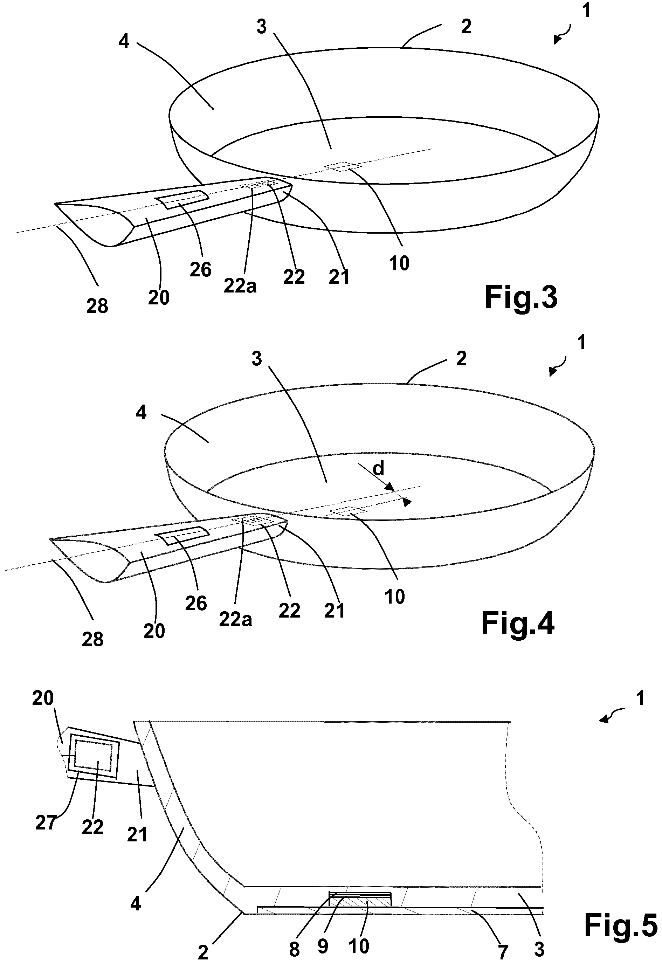

Dans une autre variante de réalisation illustrée à la figure 5, deux éléments 8, 9 réalisés en un matériau ferromagnétique à bas point de Curie différent sont agencés au-dessus de l'aimant 10. L'élément 8 présente une température de Curie inférieure à la température de Curie de l'élément 9. Les deux éléments présentent chacun une forme de lamelle. L'aimant 10 muni des éléments 8, 9 est rapporté dans le fond 3 de la calotte 2 par frappe. Une plaque 7 en matériau ferromagnétique est rapportée sur le fond 3 et coiffe le dessous de l'aimant 10.

Le fonctionnement dans cette variante de réalisation est inversé par rapport aux variantes de réalisation précédentes. Ainsi, lorsque la température est inférieure aux températures de Curie, les éléments 8, 9 concentrent les lignes de champ émanant de l'aimant 10 et le flux magnétique transitant dans la plaque 7 vers le capteur 22 de mesure de champ magnétique est très faible. Lorsque que la température est comprise entre les deux températures de Curie, seul l'élément 9 concentre les lignes de champ émanant de l'aimant 10 et le flux magnétique transitant dans la plaque 7 vers le capteur 22 de mesure de champ magnétique augmente pour former un premier seuil. Lorsque la température s'approche de la température de Curie la plus élevée de l'élément 9, les éléments 8, 9 ne concentrent plus les lignes de champ émanant de l'aimant 10 et le flux magnétique transitant dans la plaque 7 vers le capteur 22 de mesure de champ magnétique augmente pour former un deuxième seuil.

Un tel agencement permet de détecter de manière fiable deux seuils de température du fond 3 de la calotte 2 autour des températures de Curie des deux éléments 8, 9 en matériau ferromagnétique.

La figure 3 illustre une première variante de réalisation dans laquelle la poignée 20 comporte deux capteurs 22, 22a de mesure de champ magnétique. La poignée 20 comporte un axe longitudinal 28 et les deux capteurs 22, 22a de mesure de champ magnétique sont agencés le long de cet axe longitudinal 28. L'aimant 10 est agencé dans le fond 3 de la calotte 2, le long de l'axe longitudinal 28 de la poignée 20. Ainsi, le capteur 22a le plus éloigné de l'aimant 10 est utilisé comme référence sensible aux perturbations externes et le capteur 22 le plus proche de l'aimant 10 est utilisé comme détecteur sensible également aux perturbations externes mais aussi au flux magnétique émanant de l'aimant 10.

La figure 4 illustre une deuxième variante de réalisation dans laquelle la poignée comporte également deux capteurs 22, 22a de mesure de champ magnétique. Les deux capteurs 22, 22a de mesure de champ magnétique sont agencés de part et d'autre de l'axe longitudinal 28 de la poignée 20. L'aimant 10 est agencé dans le fond 3 de la calotte 2, de manière déportée de l'axe longitudinal 28 de la poignée 20 d'une valeur d afin de provoquer une dissymétrie de détection des deux capteurs 22, 22a de mesure du champ magnétique.

Tel que visible sur la figure 2, le capteur 22 de mesure de champ magnétique est agencé dans un boitier 27 métallique permettant de réaliser un blindage électromagnétique. Le boitier 27 métallique est réalisé dans une tôle d'aluminium ou de cuivre d'épaisseur égale à un millimètre.

Dans une variante de réalisation illustrée à la figure 2, le dispositif de contrôle 25 comporte un émetteur/récepteur 24 pour transmettre ou recevoir des informations, notamment de température au dispositif de commande 33 de la plaque de chauffe 31 qui comprend également un émetteur/récepteur 34. Le dispositif de commande 33 traite notamment les informations de température pour piloter le dispositif de chauffe 32.

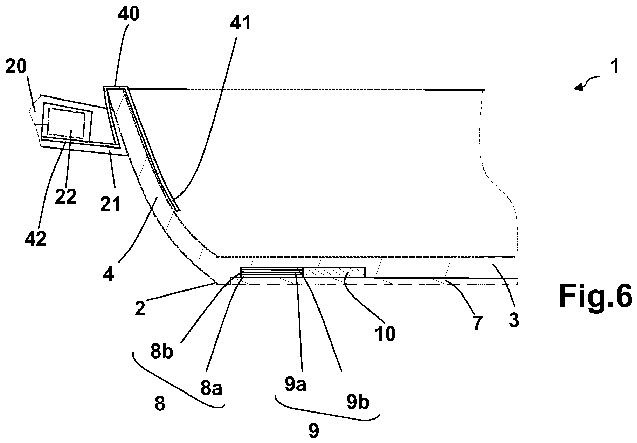

Dans une autre variante de réalisation illustrée à la figure 6, deux éléments 8, 9 réalisés en un matériau ferromagnétique à bas point de Curie différent comportent respectivement deux parties 8a, 8b, 9a, 9b, les parties 8a, 8b, 9a, 9b étant empilées de manière alternée. Les parties 8a, 8b, 9a, 9b sont agencées à coté de l'aimant 10. Les parties 8a, 8b présentent une température de Curie inférieure à la température de Curie des parties 9a, 9b. Les parties 8a, 8b, 9a, 9b présentent chacune une forme de lamelle. L'aimant 10, muni des parties 8a, 8b, 9a, 9b, est rapporté dans le fond 3 de la calotte 2 par frappe. Une plaque 7 en matériau ferromagnétique est rapportée sur le fond 3 et coiffe le dessous de l'aimant 10 et le dessous des parties 8a, 8b, 9a, 9b.

Dans cette variante de réalisation illustrée à la figure 6, le récipient de cuisson 1 comporte un élément en matériau ferromagnétique 40 présentant une température de Curie supérieure à 600°C et comprenant une première extrémité 41 agencé à proximité des parties 8a, 8b, 9a, 9b et de l'aimant 10 et une deuxième extrémité 42 agencée sous le capteur 22.

Dans une autre variante non illustrée, la deuxième extrémité 42 est agencée entre les deux capteurs (22, 22a).

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

Ainsi, dans une variante de réalisation, le capteur de mesure de champ magnétique est agencé dans un couvercle reposant sur la calotte.

## Revendications

1. Récipient de cuisson (1) destiné à être disposé sur une plaque de chauffe (30), un brûleur ou analogue pour la cuisson d'aliments et comportant une calotte (2) réalisée en un ou plusieurs matériaux amagnétiques, **caractérisé en ce que** la calotte (2) comporte un aimant (10) présentant une aimantation rémanente non nulle qui varie en fonction de la température et présentant une température de Curie supérieure à 350°C, ladite variation d'aimantation rémanente générant une variation de champ magnétique et **en ce que** ledit aimant (10) est destiné à coopérer avec au moins un capteur (22, 22a) de mesure de champ magnétique agencé en périphérie de la calotte (2) qui génère un signal électrique utilisé dans un dispositif de contrôle (25) pour permettre de déterminer la température de la calotte (2).

2. Récipient de cuisson (1) selon la revendication 1, **caractérisé en ce que** l'aimant (10) est choisi parmi les types AINiCo ou SmCo ou ferrite.

3. Récipient de cuisson (1) selon l'une quelconque des revendications précédentes, **caractérisé en ce que** la température de Curie de l'aimant est supérieure à 600°C.

4. Récipient de cuisson (1) selon l'une quelconque des revendications précédentes, **caractérisé en ce que** la calotte (2) présente un fond (3), l'aimant (10) étant agencé sur ou dans le fond (3).

5. Récipient de cuisson (1) selon l'une quelconque des revendications 1 à 3, **caractérisé en ce que** la calotte (2) présente une paroi latérale (4), l'aimant (10) étant agencé sur ou dans la paroi latérale (4).

6. Récipient de cuisson (1) selon l'une quelconque des revendications précédentes, **caractérisé en ce que** la calotte (2) comporte au moins un élément (6, 8, 9) en matériau ferromagnétique présentant une température de Curie inférieure à 300°C, ledit élément étant agencé à proximité de l'aimant (10).

7. Récipient de cuisson (1) selon la revendication précédente, **caractérisé en ce que** la calotte comporte deux éléments (8, 9) en matériau ferromagnétique présentant chacun une température de Curie différente, lesdits éléments (8, 9) étant agencés à proximité de l'aimant (10).

8. Récipient de cuisson (1) selon la revendication précédente, **caractérisé en ce que** les éléments (8, 9) en matériau ferromagnétique comportent respectivement deux parties (8a, 8b, 9a, 9b), les parties (8a, 8b, 9a, 9b) étant empilées de manière alternée.

9. Récipient de cuisson (1) selon l'une quelconque des revendications précédentes, **caractérisé en ce que** l'aimant (10) coopère avec deux capteurs (22, 22a) de mesure du champ magnétique.

10. Récipient de cuisson (1) selon la revendication précédente, **caractérisé en ce qu'**il comporte un élément en matériau ferromagnétique (40) présentant une température de Curie supérieure à 600°C et comprenant une première extrémité (41) agencée à proximité de l'aimant (10) et une deuxième extrémité (42) agencée sous un des capteurs (22, 22a) ou entre les deux capteurs (22, 22a).

11. Récipient de cuisson (1) selon l'une quelconque des revendications précédentes, **caractérisé en ce qu'**il comporte une poignée (20) fixée à la calotte (2), le capteur (22, 22a) de mesure de champ magnétique étant agencés dans la poignée (20).

12. Récipient de cuisson (1) selon la revendication 11, **caractérisé en ce que** la poignée (20) est amovible de la calotte.

13. Récipient de cuisson (1) selon l'une quelconque des revendications 11 ou 12, **caractérisé en ce que** la poignée (20) comporte un axe longitudinal (28) et deux capteurs (22, 22a) de mesure de champ magnétique coopérant avec l'aimant, les deux capteurs (22, 22a) étant agencés le long dudit axe longitudinal (28) ou de part et d'autre dudit axe longitudinal (28).

14. Récipient de cuisson (1) selon l'une quelconque des revendications précédentes, **caractérisé en ce que** le capteur (22, 22a) de mesure de champ magnétique est agencé dans un boitier (27) métallique permettant de réaliser un blindage électromagnétique.

15. Récipient de cuisson (1) selon la revendication précédente, **caractérisé en ce que** le boitier (27) métallique est réalisée dans une tôle d'aluminium ou de cuivre d'épaisseur inférieure à 2 millimètres.

16. Récipient de cuisson (1) selon l'une quelconque des revendications précédentes **caractérisé en ce qu'**il est une poêle, une casserole, une sauteuse, un faitout ou un autocuiseur.

## Patentansprüche

1. Kochgefäß (1), das dazu bestimmt ist, auf einer Heizplatte (30), einem Brenner oder dergleichen zum Kochen von Speisen angeordnet zu werden und eine Kappe (2) umfasst, die aus einem oder mehreren nichtmagnetischen Materialien realisiert ist, **dadurch gekennzeichnet, dass** die Kappe (2) einen Magnet (10) umfasst, der eine von Null verschiedene Remanenzmagnetisierung aufweist, die sich als eine Funktion der Temperatur ändert und eine Curie-Temperatur von mehr als 350 ° C aufweist, wobei die Variation der Remanenzmagnetisierung eine Variation des Magnetfelds erzeugt, und dass der Magnet (10) dazu bestimmt ist, mit mindestens einem Sensor (22, 22a) zum Messen des Magnetfelds zusammenzuwirken, der am Umfang der Kappe (2) angeordnet ist und ein elektrisches Signal erzeugt, das in einer Steuervorrichtung (25) verwendet wird, um es zu ermöglichen, die Temperatur der Kappe (2) zu bestimmen.

2. Kochgefäß (1) nach Anspruch 1, **dadurch gekennzeichnet, dass** der Magnet (10) aus den Typen AINiCo oder SmCo oder Ferrit ausgewählt ist.

3. Kochgefäß (1) nach einem der vorhergehenden Ansprüche, **dadurch gekennzeichnet, dass** die Curie-Temperatur des Magneten größer als 600 °C ist.

4. Kochgefäß (1) nach einem der vorhergehenden Ansprüche, **dadurch gekennzeichnet, dass** die Kappe (2) einen Boden (3) umfasst, wobei der Magnet (10) am oder in dem Boden (3) angeordnet ist.

5. Kochgefäß (1) nach einem der Ansprüche 1 bis 3, **dadurch gekennzeichnet, dass** die Kappe (2) eine Seitenwand (4) aufweist, wobei der Magnet (10) an oder in der Seitenwand (4) angeordnet ist.

6. Kochgefäß (1) nach einem der vorhergehenden Ansprüche, **dadurch gekennzeichnet, dass** die Kappe (2) mindestens ein Element (6, 8, 9) aus ferromagnetischem Material umfasst, das eine Curie-Temperatur von weniger als 300 °C aufweist, wobei das Element nahe bei dem Magnet (10) angeordnet ist.

7. Kochgefäß (1) nach dem vorhergehenden Anspruch, **dadurch gekennzeichnet, dass** die Kappe zwei Elemente (8, 9) aus ferromagnetischem Material umfasst, die jeweils eine unterschiedliche Curie-Temperatur aufweisen, wobei die Elemente (8, 9) nahe bei dem Magnet (10) angeordnet sind.

8. Kochgefäß (1) nach dem vorhergehenden Anspruch, **dadurch gekennzeichnet, dass** die Elemente (8, 9) aus ferromagnetischem Material jeweils zwei Teile (8a, 8b, 9a, 9b) umfassen, wobei die Teile (8a, 8b, 9a, 9b) abwechselnd gestapelt sind.

9. Kochgefäß (1) nach einem der vorhergehenden Ansprüche, **dadurch gekennzeichnet, dass** der Magnet (10) mit zwei Sensoren (22, 22a) zum Messen des Magnetfelds zusammenwirkt.

10. Kochgefäß (1) nach dem vorhergehenden Anspruch, **dadurch gekennzeichnet, dass** es ein Element (40) aus ferromagnetischem Material umfasst, das eine Curie-Temperatur von mehr als 600 ° C aufweist und ein erstes Ende (41), das nahe bei dem Magnet (10) angeordnet ist, und ein zweites Ende (42) umfasst, das unter einem der Sensoren (22, 22a) oder zwischen den beiden Sensoren (22, 22a) angeordnet ist.

11. Kochgefäß (1) nach einem der vorhergehenden Ansprüche, **dadurch gekennzeichnet, dass** es einen an der Kappe (2) befestigten Griff (20) umfasst, wobei die Sensoren (22, 22a) zum Messen des Magnetfelds in dem Griff (20) angeordnet sind.

12. Kochgefäß (1) nach Anspruch 11, **dadurch gekennzeichnet, dass** der Griff (20) von der Kappe abnehmbar ist.

13. Kochgefäß (1) nach einem der Ansprüche 11 oder 12, **dadurch gekennzeichnet, dass** der Griff (20) eine Längsachse (28) und zwei Sensoren (22, 22a) zum Messen des Magnetfelds umfasst, die mit dem Magnet zusammenwirken, wobei die beiden Sensoren (22, 22a) entlang der Längsachse (28) oder auf jeder Seite der Längsachse (28) angeordnet sind.

14. Kochgefäß (1) nach einem der vorhergehenden Ansprüche, **dadurch gekennzeichnet, dass** der Sensor (22, 22a) zum Messen des Magnetfelds in einem Metallgehäuse (27) angeordnet ist, das es ermöglicht, eine elektromagnetische Abschirmung zu realisieren.

15. Kochgefäß (1) nach dem vorhergehenden Anspruch, **dadurch gekennzeichnet, dass** das Metallgehäuse (27) aus Aluminium- oder Kupferblech mit einer Dicke von weniger als 2 mm hergestellt ist.

16. Kochgefäß (1) nach einem der vorhergehenden Ansprüche, **dadurch gekennzeichnet, dass** es eine Pfanne, ein Kochtopf, eine Bratpfanne, ein Schmortopf oder ein Schnellkochtopf ist.

## Claims

1. Cooking vessel (1) configured to be placed on a heating element (30), a burner, or a similar apparatus for the cooking of food and comprising a cap (2) made of one or several antimagnetic materials, **characterised in that** the cap (2) comprises a magnet (10) featuring non-nil remanent magnetisation that varies depending on the temperature and featuring a Curie temperature greater than 350°C, said remanent magnetisation variation generating a variation of the magnetic field, and **in that** said magnet (10) is configured to cooperate with at least one sensor (22, 22a) that measures the magnetic field and that is arranged in the vicinity of the cap (2) to generate an electric signal used in a control device (25) to determine the temperature of the cap (2).

2. Cooking vessel (1) according to claim 1, **characterised in that** the magnet is chosen from the AINiCo-, SmCo- or ferrite-types.

3. Cooking vessel (1) according to any one of the preceding claims, **characterised in that** the Curie temperature of the magnet is greater than 600°C.

4. Cooking vessel (1) according to any one of the preceding claims, **characterised in that** the cap (2) features a bottom (3), the magnet (10) being arranged on or in the bottom (3).

5. Cooking vessel (1) according to any one of the claims 1 to 3, **characterised in that** the cap (2) features a side wall (4), the magnet (10) being arranged on or in the side wall (4).

6. Cooking vessel (1) according to any one of the preceding claims, **characterised in that** the cap (2) comprises at least one element (6, 8, 9) made of a ferromagnetic material featuring a Curie temperature of below 300°C, said element being arranged in the vicinity of the magnet (10).

7. Cooking vessel (1) according to the preceding claim, **characterised in that** the cap comprises two elements (8, 9) made of ferromagnetic materials, each featuring a different Curie temperature, said elements (8, 9) being arranged in the vicinity of the magnet (10).

8. Cooking vessel (1) according to the preceding claim, **characterised in that** the elements (8, 9) made of a ferromagnetic material comprise respectively two parts (8a, 8b, 9a, 9b), the parts (8a, 8b, 9a, 9b) being stacked in an alternating manner.

9. Cooking vessel (1) according to any one of the preceding claims, **characterised in that** the magnet (10) cooperates with two sensors (22, 22a) measuring the magnetic field.

10. Cooking vessel (1) according to the preceding claim, **characterised in that** it includes an element made of a ferromagnetic material (40) featuring a Curie temperature greater than 600°C and comprising a first end (41) arranged in the vicinity of the magnet (10) and a second end (42) arranged underneath one of the sensors (22, 22a) or between the two sensors (22, 22a).

11. Cooking vessel (1) according to any one of the preceding claims, **characterised in that** it comprises a handle (20) attached to the cap (2), the sensors (22, 22a) measuring the magnetic field being arranged in the handle (20).

12. Cooking vessel (1) according to claim 11, **characterised in that** the handle (20) is removable from the cap.

13. Cooking vessel (1) according to any one of the claims 11 or 12, **characterised in that** the handle (20) comprises a longitudinal axis (28) and two sensors (22, 22a) measuring the magnetic field and cooperating with the magnet, the two sensors (22, 22a) being arranged along said longitudinal axis (28) or on either side of said longitudinal axis (28).

14. Cooking vessel (1) according to any one of the preceding claims, **characterised in that** the sensor (22, 22a) measuring the magnetic field is arranged in a metal housing (27) configured to provide electromagnetic shielding.

15. Cooking vessel (1) according to the preceding claim, **characterised in that** the metal housing (27) is made of aluminium or copper sheet featuring a thickness of less than 2 millimetres.

16. Cooking vessel (1) according to any one of the preceding claims, **characterised in that** it is a pan, a pot, a frying pan, a stew pot or a pressure cooker.
